# EUROPEAN PATENT SPECIFICATION

(11) **EP 3 908 862 B1**
(45) Date of publication and mention of the grant of the patent: **19.03.2025**
(21) Application number: 20705780.3
(22) Date of filing: 07.01.2020
(51) Int. Cl.: G01V 11/00

(54) **A SEABED SURVEY APPARATUS AND A METHOD FOR USING SUCH APPARATUS**
VORRICHTUNG ZUR UNTERSUCHUNG DES MEERESBODENS UND VERFAHREN ZUR VERWENDUNG SOLCH EINER VORRICHTUNG
APPAREIL DE RELEVÉ DE FOND MARIN ET PROCÉDÉ D'UTILISATION DUDIT APPAREIL

(30) Priority: 07.01.2019 GB 201900198
(43) Date of publication of application: 17.11.2021
(73) Proprietor: Enshore Subsea Limited, Port of Blyth Blyth NE24 3PB (GB)
(72) Inventor: METCALF, James, Durham DL14 6EQ (GB)
(74) Representative: Archer, Graham John
(86) International application number: PCT/GB2020/050027
(87) International publication number: WO 2020/144468

(56) References cited:
- WO-A2-2012/156425
- CN-A- 104 280 783
- CN-B- 105 242 321
- US-A1- 2008 284 441
- US-A1- 2009 223 355
- SCHULTZ GREGORY ET AL: "Littoral applications of advanced 3D marine electromagnetics from remotely and autonomously operated platforms: Infrastructure and hazard detection and characterization", OCEANS 2017 - ABERDEEN, IEEE, 19 June 2017 (2017-06-19), pages 1 - 7, XP033236686, DOI: 10.1109/OCEANSE.2017.8084818

## Description

The present invention relates to a seabed survey apparatus and method for using such apparatus and relates particularly, but not exclusively, to a method of identifying unexploded ordinance (UXO).

The laying of undersea cables and pipelines is commonplace around the world. In order that this can be undertaken safely it is commonplace to take surveys of the seabed along the proposed route for the pipe or cable. This is particularly the case where the pipeline or cable crosses an area where naval conflict has taken place and there is a significant risk of UXO's such as mines and bombs remaining intact on the seabed. This is typically done in a two-stage process where an initial acoustic and magnetic geophysical survey is undertaken by a vessel using apparatus either mounted to the vessel or towed along behind the vessel. This is used to undertake a broad survey identifying potential targets of concern.

Once such targets have been identified a Remotely Operated Vehicle (ROV) is used to conduct a more detailed survey of the targets which have been identified. This process involves flying an ROV over the target area in short reciprocal paths crossing the survey area close to the seabed in a pattern which allows more detailed topographic and metallic content data to be gathered relating to the seabed around the target. This in turn allows a detailed image to be produced which can then be interpreted to determine whether remedial action is required. However, accurate data acquisition requires ROV stability and smooth flight and therefore additional time is taken to overrun the target area, this allows the ROV to turn then regain stability for the next crossing all of which is time consuming.

In order for such targeted surveys to be undertaken by an ROV, the conditions on the seabed must be quite calm and it is quite common, particularly in areas of shallow water where currently are stronger, for the undertaking of such a survey to be very difficult or only possible during certain states of tide and certain weather conditions. Furthermore, the manpower required to operate an ROV and process the data is significant and specialist and large vessels are required in order to handle the on and off loading of the ROV. As a result, the detailed surveys are expensive to undertake adding significantly to the cost of laying a cable or pipeline.

Examples of the prior art are disclosed in the patent applications published under the following numbers US2008284441, US2009223355, WO2012156425, CN104280783, CN105242321 Schultz Gregory et al: "Littoral applications of advanced 3D marine electromagnetics from remotely and autonomously operated platforms: Infrastructure and hazard detection and characterization" Oceans 2017 - Aberdeen, IEEE, 19 June 2017 pages 1-7.

Preferred embodiments of the present invention seek to overcome or alleviate the above described disadvantages of the prior art.

According to an aspect of the present invention there is provided a seabed survey apparatus as set out in claim 1.

By providing a survey apparatus with a body mounted on a frame and detectors for gathering data related to topographical information and metallic content information of the seabed the advantage is provided that an accurate survey of a small area of seabed, typically 10 m x 10 m, can be surveyed in detail much less expensively than deploying an ROV. Furthermore, the number of personnel required to operate the device of the present invention and the skill level of the people on the vessel is significantly lower than to operate an ROV. The apparatus of the present invention can be lowered from a vessel by a crane via a lift cable (which is accompanied by a secondary cable carries electrical power and the signals from the detectors). The time taken to lower the apparatus of the present invention is similar to that required to deploy ROV and as a result the time saving comes from the speed of scanning. For example, an ROV can take approximately 80 minutes to conduct a seabed survey that can be conducted in 10 minutes using the apparatus of the present invention. Furthermore, because the apparatus of the present invention is stabilised on the seabed the data received is more accurate and requires less data manipulation and interpretation in order to produce clear and accurate images. These images can also be created in seabed conditions which are significantly worse than those where an ROV is useable. For example, in relatively shallow areas and at time of significant tidal current ROV devices are unable to operate whereas the apparatus of the present invention is able to operate safely and produce high quality images.

According to the invention, the body further comprises at least one detector mover for moving the detector on said frame.

By having a detector mover, the advantage is provided that smaller numbers of detectors are required in order to scan a large area such as 10 m x 10 m.

According to the invention, the detector mover comprises a beam mounted and movable on said frame, said detectors mounted on said beam.

By using a beam mounted to the frame, the advantage is provided that a single row of detectors can be provided to produce an image across a significantly larger area.

In a further preferred embodiment the detector mover further comprises a carriage mounted on and moveable along said beam and having at least one detector mounted thereon.

By providing a carriage mounted to the beam the advantage is provided that a single detector can scan the whole area immediately below the apparatus.

The detector mover may comprise at least one height adjustment device for moving at least one of said detector relative to the seabed.

Having the detectors mounted on a height adjustable device provides the advantage that the apparatus can be used on unusual terrain of seabed to maintain the accuracy of images produced.

The apparatus may further comprise at least one third detector for gathering third data which can be interpreted to give visual information relating to the seabed adjacent said body.

Having a third detector which can gather visual information allows further detail of the potential UXO to be provided. This improves the accuracy of UXO identification and reduces the likelihood of false positive identification.

The apparatus may also further comprise at least one fourth detector for gathering fourth data which can be interpreted to give topographical information relating to a volume below said surface of the seabed adjacent said body and wherein said first detector gathers information which can be interpreted to give topographical information relating to said surface of the seabed adjacent said body.

In a preferred embodiment the legs comprise height adjustment means for altering the length of the legs.

By altering allowing the height of the legs to be altered the advantage is provided that the frame can be levelled or stabilised in order to produce the best data images.

In a preferred embodiment the first detector comprises at least one sonar apparatus.

In another preferred embodiment the first detector comprises at least one multibeam echo sound apparatus.

In a preferred embodiment the first detector comprises at least one laser scanner.

The first detector may comprise at least one camera.

By using a camera (preferably multiple cameras) to generate the topographical information has the advantage that both topographical and image information can be obtain from a single set or type of detectors.

In a preferred embodiment the second detector comprises at least one gradiometer.

In another preferred embodiment the second detector comprises at least one induction electrically conductive material detector.

In a preferred further embodiment the third detector comprises at least one camera.

The apparatus may further comprise at least one lighting device.

In another preferred embodiment the fourth detector comprises a sub-bottom imager.

The apparatus may also further comprise at least one pump for removing seabed material from adjacent the apparatus.

According to another aspect of the present invention there is provided a method of conducting a seabed survey according to claim 17.

The method may further comprise processing said data to produce at least one video image of the seabed adjacent said body.

The method may further comprise firstly conducting at least one acoustic and magnetic geographic survey of the seabed to identify potential targets for conducting the steps set out above to undertake a more detailed survey.

The method may the further comprise dealing with any unexploded ordinance identified in said survey and repeating the steps set out above.

The method may also further comprise using said pump to remove material from the seabed.

In a preferred embodiment the data from the vessel is sent to an onshore location and undertaking said processing using a processing device located onshore.

Onshore data-processing significantly reduces the manpower costs associated with undertaking the UXO surveys using the apparatus of the present invention.

Furthermore, the provision of processed data package to UXO specialists onshore further reduces the cost of carrying the specialist onboard the vessel during the initial survey campaign.

Should physical intervention works be required at the site in relation to potential UXO, the apparatus can be deployed again to perform acoustic and magnetic geographic survey of the seabed confirming success or progress of the intervention works.

Preferred embodiments of the present invention will now be described, by way of example only, and not in any limitative sense with reference to the accompanying drawings in which:
Figure 1 is a perspective view of a first embodiment of the present invention;
Figure 2 is a side view of the apparatus of figure 1;
Figure 3 is a side view, from another side, of the apparatus of figure 1; and
Figure 4 is a schematic representation of a first embodiment of the present invention.

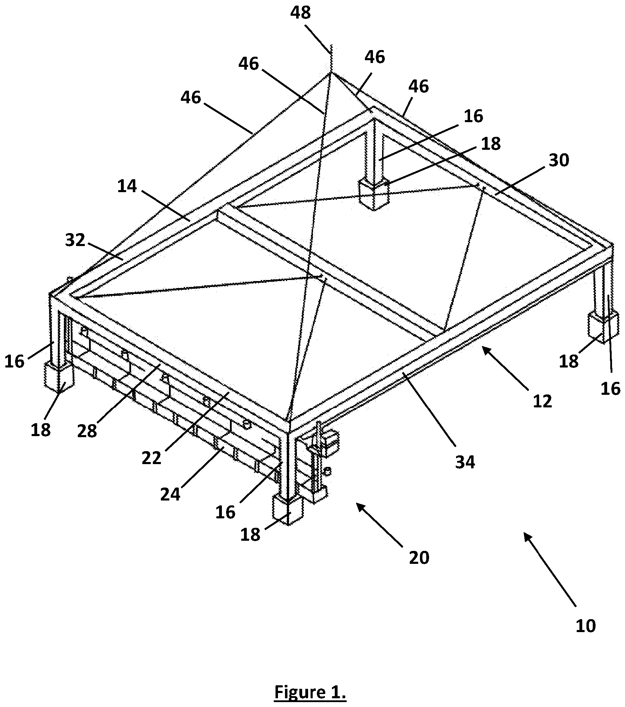

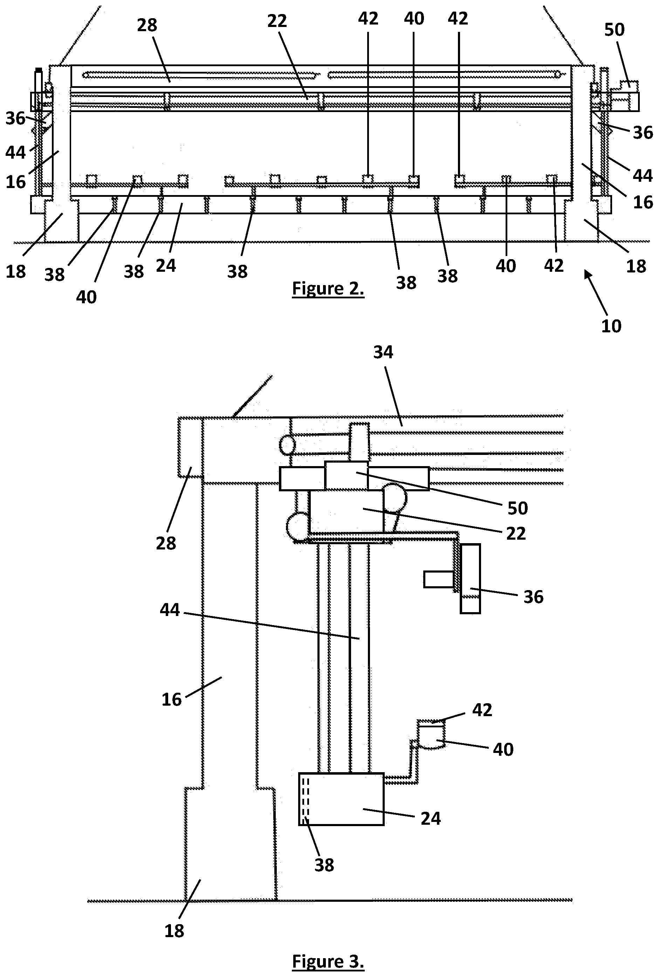

Referring to figures 1 to 3, a seabed survey apparatus 10 includes a body, generally indicated at 12 which itself comprises a frame 14 supported on a plurality, in the embodiment shown in figure 1, four legs 16. The ends of the legs 16, which are distal of the frame 14, are provided with feet 18 to engage the seabed when the survey apparatus 10 is in use. The legs are formed in two parts and are extendable, by hydraulic rams, to enable the body to be stabilised and the frame levelled if necessary.

Mounted to the body 12 and specifically to the frame 14 is a detector mover in the form of a beam 20 which has an upper beam portion 22 and a lower beam portion 24. The upper beam portion 22 is mounted to and is movable on the frame 14. Specifically, the upper beam has a hydraulic motor 26 which is able to drive wheels (not shown) mounted in the frame 14 to move the beam 20 from one end of the frame 14 to the other. However, other suitable drive mechanisms, such as electrical drives, may be used. The outermost part of the frame 14 is formed from four beam members 28, 30, 32 and 34 and, in the example shown in figure 1, the beam moves from frame member 28 to frame member 30 by travelling along the frame members 32 and 34.

Mounted to the beam 20, and therefore in turn to the frame 14, are a plurality of detectors which gather data about the seabed adjacent the survey apparatus. These detectors include a first detector in the form of a pair of multi-beam echo sounders 36 which are mounted to either end of the upper beam portion 22. This multi-beam echo sounders are able to gather data which, when processed, can be interpreted to give topographical information relating to the seabed adjacent the apparatus. This data is presented in the form of a map of the 10 m x 10 m square below the frame 14.

Mounted on the lower beam portion 24 are a plurality, in this embodiment, ten, second detectors, in the form of gradiometers 38 which gather data that when processed can be interpreted to give information relating to the metallic content of the seabed adjacent the apparatus. By providing ten gradiometers 38 the whole width of the beam 20 can be scanned in a single operation providing an accurate assessment of the presence or absence of metal objects on, buried into or below the seabed. This signal strength data is presented in the form of a map of the 10 m x 10 m square below the frame 14.

Also mounted to the lower beam portion 24 are at least one, and in this example a plurality, of third detectors, in the form of a series of cameras 40. Associated with the cameras are a plurality of lights 42 which together gather third data which can be interpreted to give visual information relating to the seabed adjacent the apparatus. This data is presented in the form of digital video recordings and images of the 10 m x 10 m square below the frame 14.

Joining the upper and lower beam portions 22 and 24 are a pair of beam connectors 44 which are hydraulically or electrically controlled to vary the distance between the upper and lower beam portions thereby allowing the height at which the cameras 40, lights 42 and gradiometers 38 are scanned relative to the seabed. This is particularly important where the seabed surface is uneven, where a suspected UXO's extend out of the seabed and where the seabed is particularly soft and the feet and legs begin to sink into that surface.

In order to manoeuvre the apparatus 10 onto the seabed a cable 46 is provided from each corner of the frame 14, these cables being joined together and suspended from a main lift cable 48.

A second cable (running parallel to the main lifting cable 48 but not shown in the figures) is used to carry power and data. This cable enables data from the various detectors to be transferred, via a transfer processor 50, and received on board the vessel.

Operation of the seabed survey apparatus will now be described. Before the apparatus is used an initial survey of the whole of the route of a proposed pipeline or cable is undertaken using standard surveying techniques such as acoustic surveying to identify topographical information and magnetic surveys. These are typically undertaken using multibeam echo sounder and/or side scan sonar conducted from a moving vessel and metal detection using a gradiometer. This initial survey identifies possible targets which require further investigation.

These targets then utilise the seabed survey apparatus 10 of the present invention in order to conduct a more detailed survey of that target area. A vessel delivers the seabed survey apparatus 10 to the target area by lowering the apparatus on cables 46 and 48 until the feet 18 of legs 16 contact the seabed. The location of the apparatus 10 on the seabed is determined using methods familiar to persons skilled in the art including, but not limited to:
Ultra-short baseline (USBL) acoustic transceiver, mounted on the support vessel and compatible transponders on the apparatus;
Inverted USBL, with the transceiver mounted on the apparatus and compatible beacon on the support vessel;
Long baseline (LBL) positioning using an array of networked LBL transponders;
Inertial navigation system (INS) either aided or unaided by subsurface or surface positioning including LBL or sparse array methods;
Surface positioning via differentially corrected GPS (global positioning system) mounted on the apparatus;
Relative positioning (from the support vessel) via a radar or light reflector mounted on the apparatus or via a taut wire system mounted on the apparatus;
Relative positioning (from the support vessel) by knowing the geospatial location of the crane or the LARS (launch and recovery system) system mounted on the asset; and
Positioning from remote station either onshore or on a nearby structure using land survey systems such as a total station.

The surface positioning of the support vessel is typically achieved by utilising GPS differentially corrected by either real time kinetic (RTK) network or base station corrections received by satellite, internet, mobile or ultra-high frequency radio communications.

For relative positioning systems (such as USBL transceiver, taut wire or LARS) the geographic location of the apparatus 10 relative to the vessel is determined by 3D rotation calculation using some or all of the following factors:
Inertial navigation system (INS) aided by aforementioned surface positioning systems;
Motion reference unit (MRU) determining the vessel attitude;
Heading sensor such as a fluxgate compass, spinning or fibre optic gyroscope; and
Measured offsets to determine a vessel reference frame whereby the relative position of significant sensors, systems and mechanisms are known.

If not established by the systems mentioned above, the depth below sea level of the apparatus is determined via pressure / water depth sensors mounted on the apparatus or relative to known seabed surface levels.

Once the apparatus is located on the seabed the legs 16 can be extended or retracted as required in order to stabilise the apparatus and if necessary level the frame 14 relative to the seabed. When the apparatus is stable and in position the surveying of the seabed can be conducted.

Data is gathered by each of the detectors when the beam is in the starting position, adjacent the first frame member 28, as shown in figure 1. The beam 20 is then moved along the frame members 32 and 34 and data gathered whilst the beam moves. Once the beam 20 has reached the frame member 30 a scan of the seabed is complete. The data is either continually streamed up to the survey vessel or packaged and transferred once the survey is complete.

The various data are then processed in order to produce graphic representations of the seabed. The data from the multibeam echo sounders 36 is used to produce topographical maps of the 10 m x 10 m portion of the seabed immediately below the frame 14 of the survey apparatus 10. Similarly, the data gathered from the magnetic field equipment (that is the gradiometers 38) is processed to produce one or more images representing the metallic or conductive content of the seabed adjacent the survey apparatus. The image data from the cameras is also processed to produce images of the seabed adjacent the apparatus.

This data processing can take place on the vessel or alternatively data can be transferred from the vessel to an onshore data processing facility. This allows data from multiple surveys to be processed by an experienced data analyst who does not need to travel to the survey location.

In the event that one or more UXO's are identified in a survey suitable remedial action can be taken. This can include removal of the UXO, for example by explosion. A repeat survey can then be undertaken in order to determine whether the remedial action that has sufficiently dealt with the UX0 to make the survey area safe.

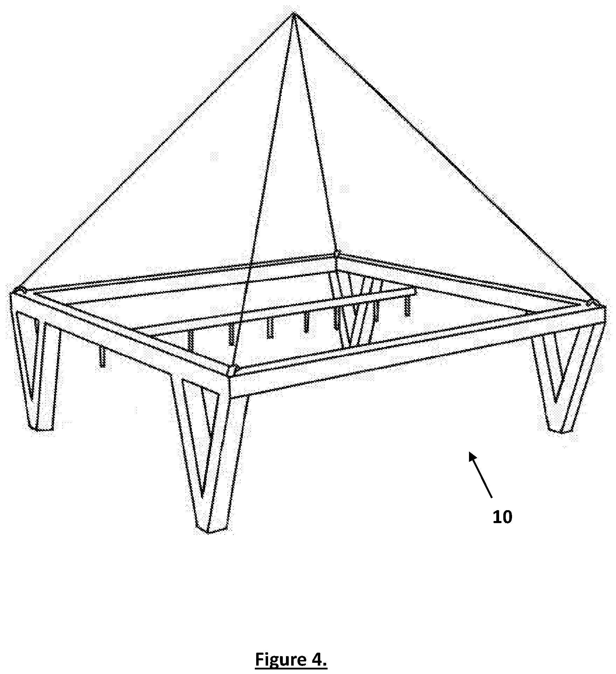

It will be appreciated by persons skilled in the art that the above embodiments have been described by way of example only and not in any limitative sense, and that various alterations and modifications are possible without departure from the scope of the protection which is defined by the appended claims. For example, figure 4 shows an alternative embodiment of the present invention. In this embodiment the legs 16 are not extendable and the beam 20 is a single beam carrying all of the detectors. In this example, since the legs cannot vary the distance of the detectors from the seabed surface, it is advantageous to have the height of the beam adjustable to allow the detectors to be positioned at the ideal distance from the surface being surveyed.

It should be noted that the beam 20 is not an essential component of the present invention as the frame could be mounted with sufficient detectors to capture data for the whole of the 10 m x 10 m area below the survey apparatus. Although such an embodiment has advantages of being mechanically simpler that the moving beam, the additional expense of many more detectors may make this option less desirable.

The gathering and interpretation of data to provide topographical information relating to the seabed can be carried out by other means than the multibeam echo sound in the following non-limiting list. For example, laser scanners can be used to generate the topographical information. Furthermore, acoustic sonar can be used and this would typically involve placing four sonar detector devices in the corners of the frame 14 thereby avoiding the need to mount them on the beam 20.

The topographical information can also be interpreted from the image data gathered by the cameras. As a result, the first detectors can be replaced with cameras which also provide the video images. This is achieved by fixed separation of multiple cameras with known positions to allow photogrammetric modelling of the imagery they produce to create three dimensional images which are the topographic information of the seabed surface. In this example the second detectors remain as those determining the metal content in the seabed.

The cameras 40 described above are typically standard underwater cameras with light detection in the visible range. However, spectral cameras detecting light outside the standard visible range may be used to improve visibility where the water column contains obstructive levels of particles. In addition, the use of bandpass filters to as assist in material identification may be used.

Other material detection techniques may also be used to determine the metallic content of the seabed adjacent the apparatus. For example, pulse induction detectors can be used. This method is particularly effective at shorter ranges than gradiometers and is therefore very effective in the apparatus of the present invention as the distance from the detectors to the seabed is easily controlled by the adjustment of the legs or the beam relative to the frame.

In addition to the other detectors, fourth detectors, in the form of sub-bottom imagers, are also provided in a further alternative embodiment. These sub-bottom imagers are able to gather data which can be interpreted to provide information relating to the composition of the seabed below the surface (which is measured by the first detector, multi-echo sounder 36. The additional use of the sub-bottom imaging provides additional useful information particularly relating to the depth at which metal objects, detected by the second detectors gradiometers 38, are buried. For example, the sub-bottom imager can distinguish a small metallic object just below the seabed surface from a larger object more deeply buried.

Furthermore, the sub-bottom imager may be used in place of the multibeam echo sounders 36 by providing data which can be interpreted to provide information about the seabed and the volume below the seabed, particularly topographical information relating to the seabed surface and below the seabed surface adjacent the frame. In other words, a combination of sub-bottom imager together with gradiometers, or the like, for determining metallic content on or below the seabed, provides sufficient information to identify UXO's. However, this information is enhanced by the addition of video images and further enhanced with multi-beam echo sounders providing true topographical data.

In addition to the surveying described above the apparatus can be fitted with a suction dredging system to perform functions including excavation of seabed material from within the surveyed area, dredging, de-burial and uncovering of objects detected in the survey. A suction dredging system (air or jet water) is provided to excavate seabed material from below the frame elevation. The dredging component provided has sufficient power/performance for removal of sand sized solid content at a suction capacity >150m3/hr with the dredge pump being able to direct the discharge flow away from the inspection area for deposition on to the adjacent seabed. The dredging system nozzle preferably has a reach 2.0m below the horizontal plane of the frame footings allowing removal of the seabed material up to 2.0m below seabed level. To be effective the dredging system can remove cohesive seabed material within 0.2m of an adjacent vertical surface without contacting the adjacent surface and horizontal movement of the dredging system can be controlled within an accuracy of 0.05m. A system of this type allows effective removal of removal of seabed material including, but not limited to, sand, soft clay up to 40kPa and gravel up to 60mm. Once a dredging operation has been completed a resurvey can be conducted in particular using the camera to review the visual impact of the seabed material removal. Thus, a more accurate picture of the UXO or other object located can be completed before remedial action is undertaken.

## Claims

1. A seabed survey apparatus comprising:
a body (12) having a frame (14) and a plurality of legs (16) extending therefrom, distal ends of said legs for engaging the seabed;
at least one first detector (36) mounted on said body for gathering first data to be interpreted to give topographical information relating to a surface or a volume below said surface of the seabed adjacent said body; and
at least one second detector (38) mounted on said body for gathering second data to be interpreted to give information relating to the metallic content of the seabed adjacent said body, wherein said body (12) is **characterized in that** it further comprises at least one detector mover for moving the detectors (36, 38) on said frame (14) and said detector mover comprises a beam (20) mounted and movable on said frame (14), said detectors (36, 38) mounted on said beam (20).

2. The seabed survey apparatus according to claim 1, wherein said detector mover further comprises a carriage mounted on and moveable along said beam (20) and having at least one detector (36, 38) mounted thereon.

3. The seabed survey apparatus according to claims 1 or 2, wherein said detector mover comprises at least one height adjustment device for moving at least one of said detector (36, 38) relative to the seabed.

4. The seabed survey apparatus according to any preceding claim, further comprising at least one third detector (40) for gathering third data which can be interpreted to give visual information relating to the seabed adjacent said body (12).

5. The seabed survey apparatus according to any preceding claim, further comprising at least one fourth detector for gathering fourth data which can be interpreted to give topographical information relating to a volume below said surface of the seabed adjacent said body and wherein said first detector gathers information which can be interpreted to give topographical information relating to said surface of the seabed adjacent said body.

6. The seabed survey apparatus according to any preceding claim, wherein said legs (16) comprise height adjustment means for altering the length of the legs.

7. The seabed survey apparatus according to any preceding claim, wherein said first detector (36) comprises at least one sonar apparatus.

8. The seabed survey apparatus according to any of claim 1 to 6, said first detector (36) comprises at least one multibeam echo sound apparatus.

9. The seabed survey apparatus according to any of claim 1 to 6, wherein said first detector (36) comprises at least one laser scanner.

10. The seabed survey apparatus according to any of claim 1 to 6, wherein said first detector (36) comprises at least one camera.

11. The seabed survey apparatus according to any preceding claim, wherein said second detector (38) comprises at least one gradiometer.

12. The seabed survey apparatus according to any of claim 1 to 10, wherein said second detector (38) comprises at least one induction electrically conductive material detector.

13. The seabed survey apparatus according to any of claim 4 to 12, wherein said third detector (40) comprises at least one camera.

14. The seabed survey apparatus according to any preceding claim, further comprising at least one lighting device.

15. The seabed survey apparatus according to any of claim 5 to 14, wherein said fourth detector comprises a sub-bottom imager.

16. The seabed survey apparatus according to any preceding claim, further comprising at least one pump for removing seabed material from adjacent the apparatus.

17. A method of conducting a seabed survey comprising the steps:
taking a seabed survey apparatus (10) comprising:
a body (12) having a frame (14) and a plurality of legs (16) extending therefrom, distal ends (18) of said legs for engaging the seabed;
at least one first detector (36) mounted on said body for gathering first data which can be interpreted to give topographical information relating to a surface or a volume below said surface of the seabed adjacent said body; and
at least one second detector (38) mounted on said body for gathering second data which can be interpreted to give information relating to the metallic content of the seabed adjacent said body, wherein said body further comprises at least one detector mover for moving the detector on said frame said detector mover comprises a beam mounted and movable on said frame, said detectors mounted on said beam,
and placing said apparatus on the seabed;
gathering data from said detectors and processing said data to produce at least one topographic image and at least one metallic content image of the seabed adjacent said body.

18. The method according to claim 17, further comprising processing said data to produce at least one video image of the seabed adjacent said body.

19. The method according to claims 17 or 18, further comprising before the steps of claims 17 or 18 conducting at least one acoustic and magnetic geographic survey of the seabed to identify potential targets for conducting the steps of claims 17 or 18 to undertake a more detailed survey.

20. The method according to claims 17 to 19 when dependent on claim 16, further comprising using said pump to remove material from the seabed and repeating the steps of any of claims 17 to 19.

21. The method according to claims 17 to 20, dealing with any unexploded ordinance identified in said survey and repeating the steps of any of claims 17 to 20.

22. The method according to claims 17 to 21, further comprising sending said data from said vessel to an onshore location and undertaking said processing using a processing device located onshore.

## Patentansprüche

1. Meeresbodenuntersuchungsvorrichtung, umfassend:
einen Körper (12) mit einem Rahmen (14) und einer Vielzahl von Füßen (16), die sich davon erstrecken, wobei distale Enden der Füße zur Eineingriffnahme mit dem Meeresboden sind;
mindestens einen ersten Detektor (36), der an dem Körper montiert ist, zum Sammeln von ersten auszuwertenden Daten, um topographische Informationen in Bezug auf eine Oberfläche oder ein Volumen unter der Oberfläche des Meeresbodens angrenzend an den Körper zu ergeben; und
mindestens einen zweiten Detektor (38), der an dem Körper montiert ist, zum Sammeln von zweiten auszuwertenden Daten, um Informationen in Bezug auf den Metallgehalt des Meeresbodens angrenzend an den Körper zu ergeben, wobei der Körper (12) **dadurch gekennzeichnet ist, dass** er weiterhin mindestens eine Detektorbewegungsvorrichtung zum Bewegen der Detektoren (36, 38) an dem Rahmen (14) umfasst, und wobei die Detektorbewegungsvorrichtung einen Träger (20) umfasst, der an dem Rahmen (14) montiert und bewegbar ist, wobei die Detektoren (36, 38) an dem Träger (20) montiert sind.

2. Meeresbodenuntersuchungsvorrichtung nach Anspruch 1, wobei die Detektorbewegungsvorrichtung weiterhin einen Schlitten umfasst, der an dem Träger (20) montiert ist und entlang diesem bewegbar ist und mindestens einen daran montierten Detektor (36, 38) aufweist.

3. Meeresbodenuntersuchungsvorrichtung nach den Ansprüchen 1 oder 2, wobei die Detektorbewegungsvorrichtung mindestens ein Höheneinstellungsgerät zum Bewegen mindestens eines der Detektoren (36, 38) in Bezug auf den Meeresboden umfasst.

4. Meeresbodenuntersuchungsvorrichtung nach einem vorhergehenden Anspruch, weiterhin umfassend mindestens einen dritten Detektor (40) zum Sammeln von dritten Daten, die ausgewertet werden können, um visuelle Informationen in Bezug auf den Meeresboden angrenzend an den Körper (12) zu ergeben.

5. Meeresbodenuntersuchungsvorrichtung nach einem vorhergehenden Anspruch, weiterhin umfassend mindestens einen vierten Detektor zum Sammeln von vierten Daten, die ausgewertet werden können, um topographische Informationen in Bezug auf ein Volumen unter der Oberfläche des Meeresbodens angrenzend an den Körper zu ergeben, und wobei der erste Detektor Informationen sammelt, die ausgewertet werden können, um topographische Informationen in Bezug auf die Oberfläche des Meeresbodens angrenzend an den Körper zu ergeben.

6. Meeresbodenuntersuchungsvorrichtung nach einem vorhergehenden Anspruch, wobei die Füße (16) Höheneinstellungsmittel zum Ändern der Länge der Füße umfassen.

7. Meeresbodenuntersuchungsvorrichtung nach einem vorhergehenden Anspruch, wobei der erste Detektor (36) mindestens eine Sonarvorrichtung umfasst.

8. Meeresbodenuntersuchungsvorrichtung nach einem der Ansprüche 1 bis 6, wobei der erste Detektor (36) mindestens eine Fächerecholotvorrichtung umfasst.

9. Meeresbodenuntersuchungsvorrichtung nach einem der Ansprüche 1 bis 6, wobei der erste Detektor (36) mindestens einen Laserscanner umfasst.

10. Meeresbodenuntersuchungsvorrichtung nach einem der Ansprüche 1 bis 6, wobei der erste Detektor (36) mindestens eine Kamera umfasst.

11. Meeresbodenuntersuchungsvorrichtung nach einem vorhergehenden Anspruch, wobei der zweite Detektor (38) mindestens ein Gradiometer umfasst.

12. Meeresbodenuntersuchungsvorrichtung nach einem der Ansprüche 1 bis 10, wobei der zweite Detektor (38) mindestens einen Induktionsdetektor mit elektrisch leitendem Material umfasst.

13. Meeresbodenuntersuchungsvorrichtung nach einem der Ansprüche 4 bis 12, wobei der dritte Detektor (40) mindestens eine Kamera umfasst.

14. Meeresbodenuntersuchungsvorrichtung nach einem vorhergehenden Anspruch, weiterhin umfassend mindestens ein Beleuchtungsgerät.

15. Meeresbodenuntersuchungsvorrichtung nach einem der Ansprüche 5 bis 14, wobei der vierte Detektor einen Sub-Bottom Imager umfasst.

16. Meeresbodenuntersuchungsvorrichtung nach einem vorhergehenden Anspruch, weiterhin umfassend mindestens eine Pumpe zum Entfernen von Meeresbodenmaterial angrenzend an die Vorrichtung.

17. Verfahren zur Durchführung einer Meeresbodenuntersuchung, umfassend die Schritte:
Nehmen einer Meeresbodenuntersuchungsvorrichtung (10), umfassend:
einen Körper (12) mit einem Rahmen (14) und einer Vielzahl von Füßen (16), die sich davon erstrecken, wobei distale Enden (18) der Füße zur Eineingriffnahme mit dem Meeresboden sind;
mindestens einen ersten Detektor (36), der an dem Körper montiert ist, zum Sammeln von ersten Daten, die ausgewertet werden können, um topographische Informationen in Bezug auf eine Oberfläche oder ein Volumen unter der Oberfläche des Meeresbodens angrenzend an den Körper zu ergeben; und mindestens einen zweiten Detektor (38), der an dem Körper montiert ist, zum Sammeln von zweiten Daten, die ausgewertet werden können, um Informationen in Bezug auf den Metallgehalt des Meeresbodens angrenzend an den Körper zu ergeben, wobei der Körper weiterhin mindestens eine Detektorbewegungsvorrichtung zum Bewegen des Detektors an dem Rahmen umfasst, wobei die Detektorbewegungsvorrichtung einen Träger umfasst, der an dem Rahmen montiert und bewegbar ist, wobei die Detektoren an dem Träger montiert sind,
und Anordnen der Vorrichtung auf dem Meeresboden;
Sammeln von Daten von den Detektoren und Verarbeiten der Daten, um mindestens ein topographisches Bild und mindestens ein Metallgehaltbild des Meeresbodens angrenzend an den Körper zu produzieren.

18. Verfahren nach Anspruch 17, weiterhin umfassend ein Verarbeiten der Daten, um mindestens ein Videobild des Meeresbodens angrenzend an den Körper zu produzieren.

19. Verfahren nach den Ansprüchen 17 oder 18, weiterhin umfassend vor den Schritten der Ansprüche 17 oder 18 ein Durchführen mindestens einer akustischen und magnetischen geographischen Untersuchung des Meeresbodens, um potenzielle Ziele für die Durchführung der Schritte der Ansprüche 17 oder 18 zu identifizieren, um eine detailliertere Untersuchung vorzunehmen.

20. Verfahren nach den Ansprüchen 17 bis 19 bei Abhängigkeit von Anspruch 16, weiterhin umfassend ein Verwenden der Pumpe zum Entfernen von Material von dem Meeresboden und ein Wiederholen der Schritte von einem der Ansprüche 17 bis 19.

21. Verfahren nach den Ansprüchen 17 bis 20, wobei jegliches nicht detoniertes Kampfmittel, das in der Untersuchung identifiziert wird, bewältigt wird und die Schritte von einem der Ansprüche 17 bis 20 wiederholt werden.

22. Verfahren nach den Ansprüchen 17 bis 21, weiterhin umfassend ein Senden der Daten von dem Fahrzeug an einen Ort auf dem Festland und ein Vornehmen der Verarbeitung unter Verwendung eines Verarbeitungsgeräts, das sich auf dem Festland befindet.

## Revendications

1. Un appareil de relevé de fond marin comprenant :
un corps (12) ayant un cadre (14) et une pluralité de pieds (16) s'étendant de celui-ci, les extrémités distales desdits pieds étant destinées à s'engager dans le fond marin ;
au moins un premier détecteur (36) monté sur ledit corps pour collecter des premières données à interpréter pour donner des informations topographiques relatives à une surface ou un volume au-dessous de ladite surface du fond marin adjacente audit corps ; et
au moins un deuxième détecteur (38) monté sur ledit corps pour collecter des deuxièmes données à interpréter pour donner des informations relatives au contenu métallique du fond marin adjacent audit corps, dans lequel ledit corps (12) est **caractérisé en ce qu'**il comprend en outre au moins un dispositif de déplacement de détecteur pour déplacer les détecteurs (36, 38) sur ledit cadre (14) et ledit dispositif de déplacement de détecteur comprend une poutre (20) montée et pouvant se déplacer sur ledit cadre (14), lesdits détecteurs (36, 38) étant montés sur ladite poutre (20).

2. L'appareil de relevé de fond marin selon la revendication 1, dans lequel ledit dispositif de déplacement de détecteur comprend en outre un chariot monté sur et pouvant se déplacer le long de ladite poutre (20) et ayant au moins un détecteur (36, 38) y étant monté.

3. L'appareil de relevé de fond marin selon la revendication 1 ou 2, dans lequel ledit dispositif de déplacement de détecteur comprend au moins un dispositif de réglage de la hauteur pour déplacer au moins un desdits détecteurs (36, 38) par rapport au fond marin.

4. L'appareil de relevé de fond marin selon l'une quelconque des revendications précédentes, comprenant en outre au moins un troisième détecteur (40) pour collecter des troisièmes données qui peuvent être interprétées pour donner des informations visuelles relatives au fond marin adjacent audit corps (12).

5. L'appareil de relevé de fond marin selon l'une quelconque des revendications précédentes, comprenant en outre au moins un quatrième détecteur pour collecter des quatrièmes données qui peuvent être interprétées pour donner des informations topographiques relatives à un volume au-dessous de ladite surface du fond marin adjacente audit corps et dans lequel ledit premier détecteur collecte des informations qui peuvent être interprétées pour donner des informations topographiques relatives à ladite surface du fond marin adjacente audit corps.

6. L'appareil de relevé de fond marin selon l'une quelconque des revendications précédentes, dans lequel lesdits pieds (16) comprennent un moyen de réglage de la hauteur pour modifier la longueur des pieds.

7. L'appareil de relevé de fond marin selon l'une quelconque des revendications précédentes, dans lequel ledit premier détecteur (36) comprend au moins un appareil sonar.

8. L'appareil de relevé de fond marin selon l'une quelconque des revendications 1 à 6, ledit premier détecteur (36) comprend au moins un appareil échosondeur multifaisceaux.

9. L'appareil de relevé de fond marin selon l'une quelconque des revendications 1 à 6, dans lequel ledit premier détecteur (36) comprend au moins un scanner laser.

10. L'appareil de relevé de fond marin selon l'une quelconque des revendications 1 à 6, dans lequel ledit premier détecteur (36) comprend au moins une caméra.

11. L'appareil de relevé de fond marin selon l'une quelconque des revendications précédentes, dans lequel ledit deuxième détecteur (38) comprend au moins un gradiomètre.

12. L'appareil de relevé de fond marin selon l'une quelconque des revendications 1 à 10, dans lequel ledit deuxième détecteur (38) comprend au moins un détecteur de matériau électriquement conducteur par induction.

13. L'appareil de relevé de fond marin selon l'une quelconque des revendications 4 à 12, dans lequel ledit troisième détecteur (40) comprend au moins une caméra.

14. L'appareil de relevé de fond marin selon l'une quelconque des revendications précédentes, comprenant en outre au moins un dispositif d'éclairage.

15. L'appareil de relevé de fond marin selon l'une quelconque des revendications 5 à 14, dans lequel ledit quatrième détecteur comprend un imageur du sous-sol marin.

16. L'appareil de relevé de fond marin selon l'une quelconque des revendications précédentes, comprenant en outre au moins une pompe pour retirer des matériaux du fond marin depuis l'appareil adjacent.

17. Un procédé permettant de réaliser un relevé de fond marin comprenant les étapes de :
la prise d'un appareil de relevé de fond marin (10) comprenant :
un corps (12) ayant un cadre (14) et une pluralité de pieds (16) s'étendant de celui-ci, les extrémités distales (18) desdits pieds étant destinées à s'engager dans le fond marin ;
au moins un premier détecteur (36) monté sur ledit corps pour collecter des premières données qui peuvent être interprétées pour donner des informations topographiques relatives à une surface ou un volume au-dessous de ladite surface du fond marin adjacente audit corps ; et
au moins un deuxième détecteur (38) monté sur ledit corps pour collecter des deuxièmes données qui peuvent être interprétées pour donner des informations relatives au contenu métallique du fond marin adjacent audit corps, dans lequel ledit corps comprend en outre au moins un dispositif de déplacement de détecteur pour déplacer le détecteur sur ledit cadre et ledit dispositif de déplacement de détecteur comprend une poutre montée et pouvant se déplacer sur ledit cadre, lesdits détecteurs étant montés sur ladite poutre, et placer ledit appareil sur le fond marin ;
la collecte de données desdits détecteurs et le traitement desdites données pour produire au moins une image topographique et au moins une image du contenu métallique du fond marin adjacent audit corps.

18. Le procédé selon la revendication 17, comprenant en outre le traitement desdites données pour produire au moins une image vidéo du fond marin adjacent audit corps.

19. Le procédé selon la revendication 17 ou 18, comprenant en outre, avant les étapes de la revendication 17 ou 18, la réalisation d'au moins un relevé géographique magnétique et acoustique du fond marin pour identifier des cibles potentielles afin de réaliser les étapes de la revendication 17 ou 18 pour effectuer un relevé plus détaillé.

20. Le procédé selon les revendications 17 à 19 lorsqu'elles dépendent de revendication 16, comprenant en outre l'utilisation de ladite pompe pour retirer des matériaux du fond marin et répéter les étapes de l'une quelconque des revendications 17 à 19.

21. Le procédé selon les revendications 17 à 20, destiné à gérer des munitions non explosées identifiées dans ledit relevé et à répéter les étapes de l'une quelconque des revendications 17 à 20.

22. Le procédé selon les revendications 17 à 21, comprenant en outre l'envoi desdites données depuis ledit navire à un emplacement à terre et le fait d'effectuer ledit traitement en utilisant un dispositif de traitement situé à terre.
